(19) Europäisches Patentamt
European Patent Office
Office européen des brevets

(11) **EP 4 366 188 A1**

(12) **EUROPEAN PATENT APPLICATION**
published in accordance with Art. 153(4) EPC

(43) Date of publication:
**08.05.2024 Bulletin 2024/19**

(21) Application number: **23793690.1**

(22) Date of filing: **06.09.2023**

(51) International Patent Classification (IPC):
*H04B 7/06* (2006.01)    *H04B 7/08* (2006.01)
*H04B 7/0404* (2017.01)    *H04W 84/12* (2009.01)

(86) International application number:
**PCT/KR2023/013306**

(87) International publication number:
**WO 2024/063397 (28.03.2024 Gazette 2024/13)**

(84) Designated Contracting States:
**AL AT BE BG CH CY CZ DE DK EE ES FI FR GB
GR HR HU IE IS IT LI LT LU LV MC ME MK MT NL
NO PL PT RO RS SE SI SK SM TR**
Designated Extension States:
**BA**
Designated Validation States:
**KH MA MD TN**

(30) Priority: **22.09.2022  KR 20220119772**
**19.10.2022  KR 20220134744**

(71) Applicant: **Samsung Electronics Co., Ltd.**
**Suwon-si, Gyeonggi-do 16677 (KR)**

(72) Inventor: **The designation of the inventor has not
yet been filed**

(74) Representative: **HGF**
**HGF Limited**
**1 City Walk**
**Leeds LS11 9DX (GB)**

(54) **ELECTRONIC DEVICE FOR CONTROLLING ANTENNA AND RF FRONT END MODULE AND OPERATING METHOD THEREOF**

(57)    An electronic device 101, 210, 900 is disclosed. A method of operating an electronic device includes obtaining at least one of a data rate necessary for an application, a latency necessary for the application, or traffic associated with the application, communicating with an external electronic device 102, 230 using at least one of a plurality of antennas 212 and 214 included in the electronic device 101, 210, 900 based on the at least one of the data rate, the latency, or the traffic, and performing a control associated with a radio frequency (RF) front-end module (FEM) connected to an antenna unused for communication with the external electronic device 102, 230 among the plurality of antennas 212 and 214.

FIG. 4

EP 4 366 188 A1

**Description**

BACKGROUND

1. Field

The disclosure relates to an electronic device for controlling an antenna and a radio frequency (RF) front-end module (FEM) and a method of operating the electronic device.

2. Description of Related Art

A wireless local area network (WLAN) may refer to a network between a hub and terminals, which is established using wireless frequencies or light in a limited space. The WLAN may also be called "wireless-fidelity (Wi-Fi)".
Wi-Fi standards (e.g., Wi-Fi standards after Wi-Fi 4) may support multiple-input and multiple-output (MIMO). MIMO may refer to technology of increasing a data transmission rate by transmitting and receiving data using a plurality of antennas. If MIMO is used, a plurality of spatial streams may be formed between a transmitter and a receiver.

SUMMARY

According to an embodiment, an electronic device 101, 210, 900 includes a plurality of antennas 212 and 214, a plurality of radio frequency (RF) front-end modules (FEMs) 331, 333, 335, and 337 connected to the plurality of antennas 212 and 214, at least one wireless communication module 192 connected to the plurality of RF FEMs 331, 333, 335, and 337, at least one processor 120, 351 operatively connected to the wireless communication module 192, and a memory 130 electrically connected to the processor 120, 351 and configured to store instructions executable by the processor. When the instructions are executed by the processor 120, 351, the processor 120, 351 may be configured to perform a plurality of operations. The plurality of operations may include obtaining at least one of a data rate necessary for an application, a latency necessary for the application, or traffic associated with the application. The plurality of operations may include communicating with an external electronic device 102, 230 using at least one of the plurality of antennas 212 and 214, based on the at least one of the data rate, the latency, or the traffic. The plurality of operations may include performing a control associated with an RF FEM connected to an antenna unused for communication with the external electronic device 102, 230 among the plurality of antennas 212 and 214.
According to an embodiment, a method of operating an electronic device 101, 210, 900 includes obtaining at least one of a data rate necessary for an application, a latency necessary for the application, or traffic associated with the application. The method includes communicating with an external electronic device 102, 230 using at least one of a plurality of antennas 212 and 214 included in the electronic device 101, 210, 900, based on the at least one of the data rate, the latency, or the traffic. The method includes performing a control associated with an RF FEM connected to an antenna unused for communication with the external electronic device 102, 230 among the plurality of antennas 212 and 214.

BRIEF DESCRIPTION OF THE DRAWINGS

The above and other aspects, features, and advantages of certain embodiments and examples of the present disclosure will be more apparent from the following detailed description, taken in conjunction with the accompanying drawings, in which:

FIG. 1 is a block diagram illustrating an electronic device in a network environment according to an example;
FIG. 2 is a diagram illustrating a network according to an example;
FIG. 3 is a block diagram of an electronic device according to an example;
FIG. 4 is a flowchart illustrating an example of a method of controlling an antenna and a radio frequency (RF) front-end module (FEM) according to an example;
FIG. 5 is a flowchart illustrating another example of a method of controlling an antenna and an RF FEM according to an example;
FIG. 6 is a flowchart illustrating another example of a method of controlling an antenna and an RF FEM according to an example;
FIG. 7 is a diagram illustrating a method of controlling an antenna according to an example;
FIG. 8 is a diagram illustrating a method of transmitting a management frame according to an example; and
FIG. 9 illustrates a structure of an electronic device according to an example.

DETAILED DESCRIPTION

Hereinafter, embodiments and examples will be described in detail with reference to the accompanying drawings. When describing the embodiments and examples with reference to the accompanying drawings, like reference numerals refer to like components and a repeated description related thereto will be omitted.

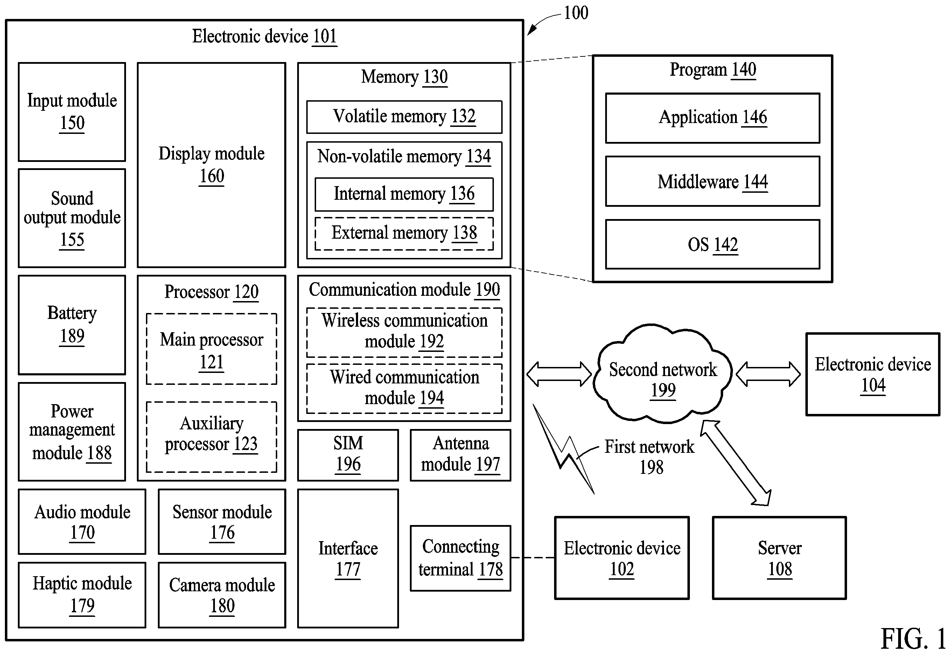

FIG. 1 is a block diagram illustrating an electronic device 101 in a network environment 100 according to an example. Referring to FIG. 1, the electronic device 101 in the network environment 100 may communicate with an electronic device 102 via a first network 198 (e.g., a short-range wireless communication network), or communicate with at least one of an electronic device 104 or a server 108 via a second network 199 (e.g., a long-range wireless communication network). The electronic device 101 may communicate with the electronic device 104 via the server 108. The electronic device 101 may include a processor 120, a memory 130, an input module 150, a sound output module 155, a display module 160, an audio module 170, a sensor module 176, an interface 177, a connecting terminal 178, a haptic module 179, a camera module 180, a power management module 188, a battery 189, a communication module 190, a subscriber identification module (SIM) 196, or an antenna module 197. In some examples, at least one (e.g., the connecting terminal 178) of the above components may be omitted from the electronic device 101, or one or more other components may be added to the electronic device 101. In some example, some (e.g., the sensor module 176, the camera module 180, or the antenna module 197) of the components may be integrated as a single component (e.g., the display module 160).

The processor 120 may execute, for example, software (e.g., a program 140) to control at least one other component (e.g., a hardware or software component) of the electronic device 101 connected to the processor 120, and may perform various data processing or computation. According to an example, as at least a part of data processing or computation, the processor 120 may store a command or data received from another component (e.g., the sensor module 176 or the communication module 190) in a volatile memory 132, process the command or the data stored in the volatile memory 132, and store resulting data in a non-volatile memory 134. The processor 120 may include a main processor 121 (e.g., a central processing unit (CPU) or an application processor (AP)) or an auxiliary processor 123 (e.g., a graphics processing unit (GPU), a neural processing unit (NPU), an image signal processor (ISP), a sensor hub processor, or a communication processor (CP)) that is operable independently of, or in conjunction with the main processor 121. For example, when the electronic device 101 includes the main processor 121 and the auxiliary processor 123, the auxiliary processor 123 may be adapted to consume less power than the main processor 121 or to be specific to a specified function. The auxiliary processor 123 may be implemented as separate from, or as part of the main processor 121.

The auxiliary processor 123 may control at least some of functions or states related to at least one (e.g., the display module 160, the sensor module 176, or the communication module 190) of the components of the electronic device 101, instead of the main processor 121 while the main processor 121 is in an inactive (e.g., sleep) state, or together with the main processor 121 while the main processor 121 is in an active state (e.g., executing an application). The auxiliary processor 123 (e.g., an ISP or a CP) may be implemented as part of another component (e.g., the camera module 180 or the communication module 190) functionally related to the auxiliary processor 123. The auxiliary processor 123 (e.g., an NPU) may include a hardware structure specified for artificial intelligence model processing. An artificial intelligence model may be generated through machine learning. Such learning may be performed, for example, by the electronic device 101 in which an artificial intelligence model is executed, or via a separate server (e.g., the server 108). Learning algorithms may include, but are not limited to, for example, supervised learning, unsupervised learning, semi-supervised learning, or reinforcement learning. The artificial intelligence model may include a plurality of artificial neural network layers. An artificial neural network may include, for example, a deep neural network (DNN), a convolutional neural network (CNN), a recurrent neural network (RNN), a restricted Boltzmann machine (RBM), a deep belief network (DBN), a bidirectional recurrent deep neural network (BRDNN), a deep Q-network, or a combination of two or more thereof, but is not limited thereto. The artificial intelligence model may additionally or alternatively include a software structure other than the hardware structure.

The memory 130 may store various pieces of data used by at least one component (e.g., the processor 120 or the sensor module 176) of the electronic device 101. The various pieces of data may include, for example, software (e.g., the program 140) and input data or output data for a command related thereto. The memory 130 may include the volatile memory 132 or the non-volatile memory 134.

The program 140 may be stored as software in the memory 130, and may include, for example, an operating system (OS) 142, middleware 144, or an application 146.

The input module 150 may receive a command or data to be used by another component (e.g., the processor 120) of the electronic device 101, from the outside (e.g., a user) of the electronic device 101. The input module 150 may include, for example, a microphone, a mouse, a keyboard, a key (e.g., a button), or a digital pen (e.g., a stylus pen).

The sound output module 155 may output a sound signal to the outside of the electronic device 101. The sound output module 155 may include, for example, a speaker or a receiver. The speaker may be used for general purposes, such as playing multimedia or playing record. The receiver may be used to receive an incoming call. The receiver may be implemented as separate from, or as part of the speaker.

The display module 160 may visually provide information to the outside (e.g., a user) of the electronic device 101. The display module 160 may include, for example, a display, a hologram device, or a projector and control circuitry to control a corresponding one of the display, hologram device, and projector. The display module 160 may include a touch sensor adapted to sense a touch, or a pressure sensor adapted to measure the intensity of force incurred by the touch.

The audio module 170 may convert a sound into an electrical signal or vice versa. According to an example, the audio module 170 may obtain the sound via the input module 150 or output the sound via the sound output module 155 or an external electronic device (e.g., the electronic device 102 such as a speaker or headphones) directly or wirelessly connected to the electronic device 101.

The sensor module 176 may detect an operational state (e.g., power or temperature) of the electronic device 101 or an environmental state (e.g., a state of a user) external to the electronic device 101, and generate an electrical signal or data value corresponding to the detected state. According to an example, the sensor module 176 may include, for example, a gesture sensor, a gyro sensor, an atmospheric pressure sensor, a magnetic sensor, an acceleration sensor, a grip sensor, a proximity sensor, a color sensor, an infrared (IR) sensor, a biometric sensor, a temperature sensor, a humidity sensor, or an illuminance sensor.

The interface 177 may support one or more specified protocols to be used for the electronic device 101 to be coupled with the external electronic device (e.g., the electronic device 102) directly (e.g., by wire) or wirelessly. The interface 177 may include, for example, a high-definition multimedia interface (HDMI), a universal serial bus (USB) interface, a secure digital (SD) card interface, or an audio interface.

The connecting terminal 178 may include a connector via which the electronic device 101 may be physically connected to the external electronic device (e.g., the electronic device 102). The connecting terminal 178 may include, for example, an HDMI connector, a USB connector, an SD card connector, or an audio connector (e.g., a headphone connector).

The haptic module 179 may convert an electrical signal into a mechanical stimulus (e.g., a vibration or a movement) or an electrical stimulus which may be recognized by a user via his or her tactile sensation or kinesthetic sensation. The haptic module 179 may include, for example, a motor, a piezoelectric element, or an electric stimulator.

The camera module 180 may capture a still image and moving images. The camera module 180 may include one or more lenses, image sensors, ISPs, or flashes.

The power management module 188 may manage power supplied to the electronic device 101. The power management module 188 may be implemented as at least part of, for example, a power management integrated circuit (PMIC).

The battery 189 may supply power to at least one component of the electronic device 101. The battery 189 may include, for example, a primary cell which is not rechargeable, a secondary cell which is rechargeable, or a fuel cell.

The communication module 190 may support establishing a direct (e.g., wired) communication channel or a wireless communication channel between the electronic device 101 and the external electronic device (e.g., the electronic device 102, the electronic device 104, or the server 108) and performing communication via the established communication channel. The communication module 190 may include one or more CPs that are operable independently of the processor 120 (e.g., an AP) and that support a direct (e.g., wired) communication or a wireless communication. The communication module 190 may include a wireless communication module 192 (e.g., a cellular communication module, a short-range wireless communication module, or a global navigation satellite system (GNSS) communication module) or a wired communication module 194 (e.g., a local area network (LAN) communication module, or a power line communication (PLC) module). A corresponding one of these communication modules may communicate with the external electronic device 104 via the first network 198 (e.g., a short-range communication network, such as Bluetooth™, wireless-fidelity (Wi-Fi) direct, or infrared data association (IrDA)) or the second network 199 (e.g., a long-range communication network, such as a legacy cellular network, a 5G network, a next-generation communication network, the Internet, or a computer network (e.g., a LAN or a wide area network (WAN)). These various types of communication modules may be implemented as a single component (e.g., a single chip), or may be implemented as multiple components (e.g., multiple chips) separate from each other. The wireless communication module 192 may identify and authenticate the electronic device 101 in a communication network, such as the first network 198 or the second network 199, using subscriber information (e.g., international mobile subscriber identity (IMSI)) stored in the SIM 196.

The wireless communication module 192 may support a 5G network after a 4G network, and next-generation communication technology, e.g., new radio (NR) access technology. The NR access technology may support enhanced mobile broadband (eMBB), massive machine type communications (mMTC), or ultra-reliable and low-latency communications (URLLC). The wireless communication module 192 may support a high-frequency band (e.g., a mmWave band) to achieve, e.g., a high data transmission rate. The wireless communication module 192 may support various technologies for securing performance on a high-frequency band, such as, e.g., beamforming, massive multiple-input and multiple-output (massive MIMO), full dimensional MIMO (FD-MIMO), an array antenna, analog beamforming, or a large scale antenna. The wireless communication module 192 may support various requirements specified in the electronic device 101, an external electronic device (e.g., the electronic device 104), or a network system (e.g., the second network 199). The wireless communication module 192 may support a peak data rate (e.g., 20 Gbps or more) for implementing eMBB, loss coverage (e.g., 164 dB or less) for implementing mMTC, or U-plane latency (e.g., 0.5 ms or less for each of downlink (DL) and uplink (UL), or a round trip of 1 ms or less) for implementing URLLC.

The antenna module 197 may transmit or receive a signal or power to or from the outside (e.g., an external electronic device) of the electronic device 101. The antenna module 197 may include an antenna including a radiating element including a conductive material or a conductive pattern formed in or on a substrate (e.g., a printed circuit board (PCB)). The antenna module 197 may include a plurality of antennas (e.g., array antennas). In such a case, at least one antenna appropriate for a communication scheme used in a communication network, such as the first network 198 or the second network 199, may be selected by, for example, the communication module 190 from the plurality of antennas. The signal or power may be transmitted or received between the communication module 190 and the external electronic device via the at least one selected antenna. According to an example, another component (e.g., a radio frequency integrated circuit (RFIC)) other than the radiating element may be additionally formed as part of the antenna module 197.

According to an example, the antenna module 197 may form a mmWave antenna module. The mmWave antenna module may include a PCB, an RFIC disposed on a first surface (e.g., the bottom surface) of the PCB or adjacent to the first surface and capable of supporting a designated high-frequency band (e.g., the mmWave band), and a plurality of antennas (e.g., array antennas) disposed on a second surface (e.g., the top or a side surface) of the PCB, or adjacent to the second surface and capable of transmitting or receiving signals in the designated high-frequency band.

At least some of the above-described components may be coupled mutually and communicate signals (e.g., commands or data) therebetween via an inter-peripheral communication scheme (e.g., a bus, general purpose input and output (GPIO), serial peripheral interface (SPI), or mobile industry processor interface (MIPI)).

According to an example, commands or data may be transmitted or received between the electronic device 101 and the external electronic device 104 via the server 108 coupled with the second network 199. Each of the external electronic devices 102 and 104 may be a device of the same type as or a different type from the electronic device 101. All or some of operations to be executed at the electronic device 101 may be executed at one or more of external electronic devices (e.g., the external electronic devices 102 and 104, or the server 108). For example, if the electronic device 101 needs to perform a function or a service automatically, or in response to a request from a user or another device, the electronic device 101, instead of, or in addition to, executing the function or the service, may request the one or more external electronic devices to perform at least part of the function or the service. The one or more external electronic devices receiving the request may perform the at least part of the function or the service requested, or an additional function or an additional service related to the request, and transfer an outcome of the performing to the electronic device 101. The electronic device 101 may provide the outcome, with or without further processing of the outcome, as at least part of a reply to the request. To that end, a cloud computing, distributed computing, mobile edge computing (MEC), or client-server computing technology may be used, for example. The electronic device 101 may provide ultra low-latency services using, e.g., distributed computing or MEC. In an example, the external electronic device 104 may include an Internet-of-things (IoT) device. The server 108 may be an intelligent server using machine learning and/or a neural network. The external electronic device 104 or the server 108 may be included in the second network 199. The electronic device 101 may be applied to intelligent services (e.g., a smart home, a smart city, a smart car, or healthcare) based on 5G communication technology or IoT-related technology.

The electronic device according to the examples disclosed herein may be one of various types of electronic devices. The electronic devices may include, for example, a portable communication device (e.g., a smartphone), a computer device, a portable multimedia device, a portable medical device, a camera, a wearable device, or a home appliance. However, the electronic device is not limited to those described above and may take any form in which the procedures disclosed herein may be implemented.

It should be appreciated that embodiments and examples of the disclosure and the terms used therein are not intended to limit the technological features set forth herein to particular embodiments and examples, and include various changes, equivalents, or replacements for a corresponding embodiment of example. With regard to the description of the drawings, similar reference numerals may be used to refer to similar or related elements. It is to be understood that a singular form of a noun corresponding to an item may include one or more of the things, unless the relevant context clearly indicates otherwise. As used herein, each of such phrases as "A or B", "at least one of A and B", "at least one of A or B", "A, B or C", "at least one of A, B and C", and "at least one of A, B, or C", may include any one of, or all possible combinations of the items enumerated together in a corresponding one of the phrases. As used herein, such terms as "1st" and "2nd," or "first" and "second" may be used to simply distinguish a corresponding component from another, and does not limit the components in other aspect (e.g., importance or order). It is to be understood that if a component (e.g., a first component) is referred to, with or without the term "operatively" or "communicatively", as "coupled with", "coupled to", "connected with", or "connected to" another component (e.g., a second component), it means that the component may be coupled with the other component directly (e.g., by wire), wirelessly, or via a third component.

As used in connection with embodiments and examples of the disclosure, the term "module" may include a unit implemented in hardware, software, or firmware, and may interchangeably be used with other terms, for example, "logic", "logic block", "part", or "circuitry". A module may be a single integral component, or a minimum unit or part thereof, adapted to perform one or more functions. For example, the module may be implemented in a form of an application-specific integrated circuit (ASIC).

Embodiments and examples as set forth herein may be implemented as software (e.g., the program 140) including one or more instructions that are stored in a storage medium (e.g., an internal memory 136 or an external memory 138) that is readable by a machine (e.g., the electronic device 101). For example, a processor (e.g., the processor 120) of the machine (e.g., the electronic device 101) may invoke at least one of the one or more instructions stored in the storage medium, and execute it. This allows the machine to be operated to perform at least one function according to the at least one instruction invoked. The one or more instructions may include code generated by a compiler or code executable by an interpreter. The machine-readable storage medium may be provided in the form of a non-transitory storage medium. Here, the term "non-transitory" simply means that the storage medium is a tangible device, and does not include a signal (e.g., an electromagnetic wave), but this term does not differentiate between where data is semi-permanently stored in the storage medium and where the data is temporarily stored in the storage medium.

A method according to embodiments and examples of the disclosure may be included and provided in a computer program product. The computer program product may be traded as a product between a seller and a buyer. The computer program product may be distributed in the form of a machine-readable storage medium (e.g., compact disc read-only memory (CD-ROM)), or be distributed (e.g., downloaded or uploaded) online via an application store (e.g., PlayStore™), or between two user devices (e.g., smartphones) directly. If distributed online, at least part of the computer program product may be temporarily generated or at least temporarily stored in the machine-readable storage medium, such as memory of the manufacturer's server, a server of the application store, or a relay server.

According to examples, each component (e.g., a module or a program) of the above-described components may include a single entity or multiple entities, and some of the multiple entities may be separately disposed in different components. One or more of the above-described components or operations may be omitted, or one or more other components or operations may be added. Alternatively or additionally, a plurality of components (e.g., modules or programs) may be integrated into a single component. In such a case, the integrated component may still perform one or more functions of each of the plurality of components in the same or similar manner as they are performed by a corresponding one of the plurality of components before the integration. According to examples, operations performed by the module, the program, or another component may be carried out sequentially, in parallel, repeatedly, or heuristically, or one or more of the operations may be executed in a different order or omitted, or one or more other operations may be added.

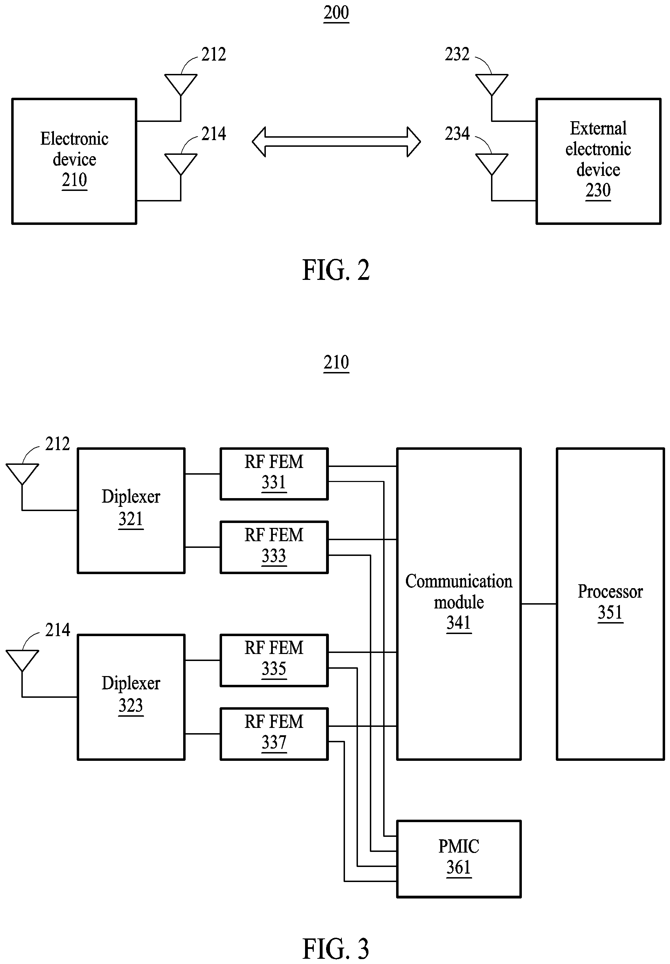

FIG. 2 is a diagram illustrating a network according to an example.

Referring to FIG. 2, an electronic device 210 (e.g., the electronic device 101 of FIG. 1) may communicate with an external electronic device 230 (e.g., the electronic device 102 of FIG. 1) via a network 200 (e.g., the first network 198 of FIG. 1). The network 200 may be a short-range wireless communication network (e.g., a Wi-Fi communication network). The electronic device 210 may communicate with the external electronic device 230 (e.g., an access point) using a plurality of antennas 212 and 214. The external electronic device 230 may communicate with the electronic device 210 using a plurality of antennas 232 and 234. The electronic device 210 may control the number of antennas used for communication. The electronic device 210 may control a radio frequency (RF) front-end module (FEM) connected to the plurality of antennas 210 and 214. The number of antennas shown in FIG. 2 is an example for description, and the electronic device 210 and the external electronic device 230 may each include at least two antennas.

FIG. 3 is a block diagram of an electronic device according to an example.

Referring to FIG. 3, an electronic device 210 (e.g., the electronic device 101 of FIG. 1) may include a plurality of antennas 212 and 214, diplexers 321, 323, RF FEMs 331, 333, 335, and 337, a communication module 341 (e.g., the wireless communication module 192 of FIG. 1), a processor 351 (e.g., the processor 120 of FIG. 1), and a PMIC 361.

The antennas 212 and 214 may transmit signals to an external electronic device (e.g., the external electronic device 102 of FIG. 1, or the external electronic device 230 of FIG. 2), or receive signals from the external electronic device 102, 230.

The diplexers 321 and 323 may be devices used to transmit and receive a plurality of signals through one line. A plurality of signals may use different frequency bands (e.g., 2.4 gigahertz (GHz), 5 GHz, and 6 GHz).

The RF FEMs 331 to 337 may amplify a signal. The RF FEMs 331 to 337 may be controlled by the communication module 341 and/or the processor 351.

According to an example, the PMIC 361 may supply power to the RF FEMs 331 to 337. The PMIC 361 may be controlled by the processor 351 such that the processor 351 may control power to the RF FEMs 331 to 337.

The communication module 341 may control the RF FEMs 331 to 337. For example, the communication module 341 may control the RF FEMs 331 to 337 based on a signal (e.g., a control signal) received from the processor 351.

The processor 351 may determine the number of antennas used for communication, among the plurality of antennas 212 and 214. The processor 351 may perform control associated with the RF FEMs 331 to 337. For example, the processor 351 may control the RF FEMs 331 to 337 by transmitting a control signal to the communication module 341.

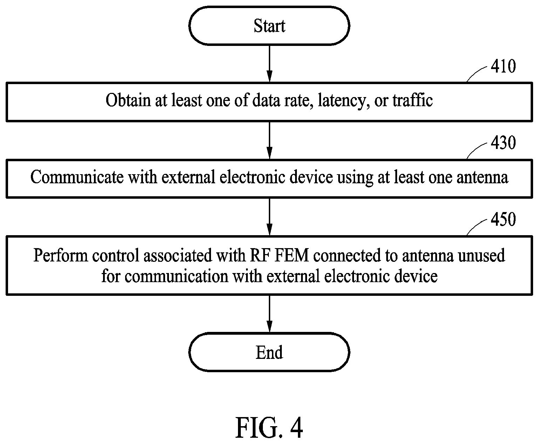

FIG. 4 is a flowchart illustrating an example of a method of controlling an antenna and an RF FEM according to an example.

Referring to FIG. 4, operations 410 to 450 may be sequentially performed, however, these operations are not limited thereto. For example, operations 430 and 450 may be performed in parallel. The operations of FIG. 4 may also be combined or one or more of the operations omitted or skipped. Furthermore, although the methods of FIGs. 4, 5, 6, 7 and 8 are described as being implemented by the electronic device (e.g., the electronic device 101 of FIG. 1, and the electronic device 210 of FIGS. 2 and 3), the methods may be performed by one of more of the components thereof, such as a processor for example. The decision operations setout in FIGs. 4, 5, 6, 7 and 8 include one or more branch operations, and these branch operations and their subsequent operations may also be considered in isolation from one another (i.e. as a standalone procedure) such that each operation flow may be considered independently. The methods described with reference to FIGs. 4, 5, 6, 7 and 8 may also be applied to the transmission and/or reception of data at the electronic device 101, 210.

In operation 410, an electronic device (e.g., the electronic device 101 of FIG. 1, and the electronic device 210 of FIGS. 2 and 3) may obtain information on at least one of a communication data rate (e.g., a transmission (TX) data rate, and a reception (RX) data rate), a communication latency, or communication traffic; however, the information is not limited to this and may also include other communication requirements or criteria, such as communication reliability for example. In particular, the electronic device 101, 210 may determine a communication data rate and/or a communication latency necessary (or desired/preferred) for an application. For example, the electronic device 101, 210 may determine the data rate and/or latency necessary for the application based on the type of application, an identity of the application, or any other information associated with the application. For example, the electronic device 101, 210 may determine different data rates and/or different latencies for each of a game application and a video call application. Alternatively, different data rates and/or different latencies may be determined for applications that are categorised as best effort services, foreground services, or background services. The application may be an application running in the foreground or background of the electronic device 101, 210. Data rate and/or latency information may also be obtained on a plurality of applications that are running at the electronic device 101, 210 and require data communications. The data rate/latencies may be pre-stored at the electronics device 101, 220 and/or received from an external source. The electronic device 101, 210 may additionally or alternatively identify traffic information (e.g., TX traffic, and RX traffic) associated with the application. For example, when an application is executed, the electronic device 101, 210 may identify a quantity of data transmitted and received (or to be transmitted or received) between the electronic device 101, 210 and an external electronic device (e.g., the electronic device 102 of FIG. 1, and the external electronic device 230 of FIG. 2) per unit of time as traffic or traffic information. For example if data communications with the external electronic device 102 230 for the application have already commenced, the electronic device 101, 210 may measure the quantity of data transmitted and/or received for the application. The external electronic device 102 230 may be any form of wireless communications device, such as a network access point (e.g. a WLAN access point) or a portable communications device.

In operation 430, the electronic device 101, 210 may determine the number of antennas to be used for communication with the external electronic device 102, 230 among antennas (e.g., the antennas 212 and 214 of FIG. 2), based on one or more of the data rate necessary for the application, the latency necessary for the application, and/or the traffic associated with the application. For example, the number of TX or RX antennas may be determined based on the number of antennas that are required to satisfy one or more of the data rate, latency, traffic associated with the application. The electronic device 101, 210 may determine the number of TX antennas and the number of RX antennas to be different from each other. For example, when an application (e.g., a mirroring service) with TX traffic greater than RX traffic is executed by the electronic device 101, 210, the electronic device 101, 210 may set the number of TX antennas to be greater than the number of RX antennas. For example, when an application (e.g., a streaming service) with RX traffic greater than TX traffic is executed by the electronic device 101, 210, the electronic device 101, 210 may set the number of RX antennas to be greater than the number of TX antennas. The electronic device 101, 210 may communicate with the external electronic device 102, 230 using at least one antenna among the antennas 212 and 214, based on the determined number of antennas. In other words, the minimum number of antennas required to meet the service standard (e.g. data rate, latency, traffic volume) may be determined and then utilized. Although data rate, latency, and traffic are referred to, other service standards or communication metrics impacted by the number of antennas used may also be used. The determined number of antennas may be used only for data communications related to the application(s) or may be used for all communications with the external electronic device 201, 230 whilst the application requires data communications.

In operation 450, the electronic device 101, 210 may perform control associated with an RF FEM connected to an antenna that is unused for communication with the external electronic device 102, 230, such as one of the antennas determined as not being required to be used to satisfy one or more of the data rate, latency, traffic associated with the application. For example, the electronic device 101, 210 may block an inflow of a signal into the RF FEM connected to the antenna unused for the communication with the external electronic device 102, 230. For example, the electronic device 101, 210 may control power supply of elements included in the RF FEM connected to the antenna unused for the communication with the external electronic device 102, 230. Control of the power supply may include reducing or disconnecting power from the RF FEM via control of the PMIC 361 so as to reduce the power consumption of the communications and the electronic device as a whole.

Consequently, the electronic device 101, 210 may determine the number of antennas used for the communication with the external electronic device 102, 230, based on the data rate and the latency necessary for the application, and/or the traffic associated with the application, to efficiently communicate with the external electronic device 102, 230.

According to an example, the electronic device 101, 210 may control RF FEMs connected to the antenna unused for the communication with the external electronic device 102, 230, to reduce an amount of power used for communication.

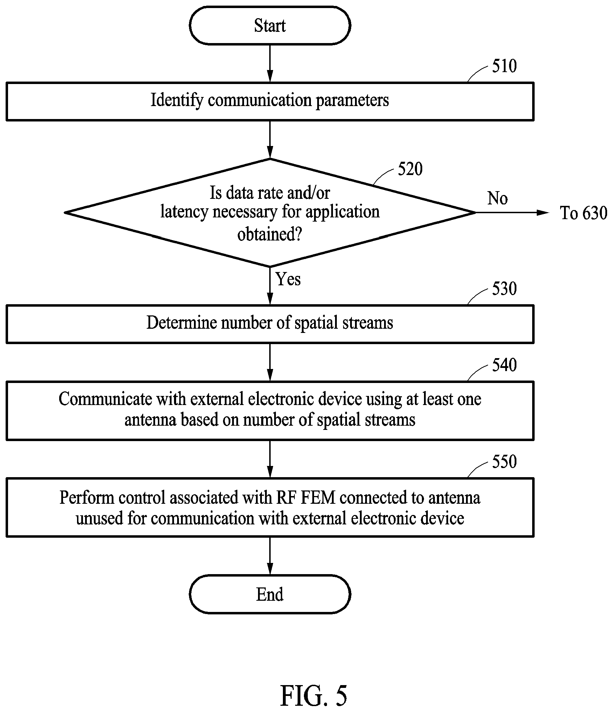

FIG. 5 is a flowchart illustrating another example of a method of controlling an antenna and an RF FEM according to an example.

Referring to FIG. 5, operations 510 to 550 may be sequentially performed, however, these operations are not limited thereto. For example, operations 540 and 550 may be performed in parallel. The operations of FIG. 5 may also be combined or one or more of the operations omitted or skipped.

In operation 510, an electronic device (e.g., the electronic device 101 of FIG. 1, and the electronic device 210 of FIGS. 2 and 3) may obtain communication parameters associated with the communication link and/or communication environment between the electronic device 101, 210 and the external, electronic device 102, 230. When the electronic device 101, 210 performs an association with an external electronic device (e.g., the external electronic device 102 of FIG. 1, and the external electronic device 230 of FIG. 2) and/or transmits and receives data to and from the external electronic device 102, 230, communication parameters associated with the link between the electronic device 101, 210 and the external electronic device 102, 230 may be obtained. Communication parameters may include one or more of a communication standard (e.g., a Wi-Fi standard), the maximum number of spatial streams of the electronic device 101, 210, the maximum number of spatial streams of an external electronic device (e.g., the external electronic device 102 of FIG. 1, and the external electronic device 230 of FIG. 2), a received signal strength indicator (RSSI), a link speed, a channel utilization, a clear channel access (CCA) busy time, radio-on time, a latency, a TX success count, and/or a TX retransmission count.

In operation 520, the electronic device 101, 210 may determine whether a data rate and/or latency necessary (or preferred, target, desired etc.) for an application that is running at the electronic device 101, 210 and requires data communications is obtained. For example, the electronic device 101, 210 may determine the data rate and/or latency necessary for the application based on the type of application, an identity of the application, or any other information associated with the application. For example, the electronic device 101, 210 may determine different data rates and/or different latencies for each of a game application and a video call application. Alternatively, different data rates and/or different latencies may be determined for applications that are categorised as best effort services, foreground services, or background services. The application may be an application running in the foreground or background of the electronic device 101, 210. Data rate and/or latency information may also be obtained on a plurality of applications that are running at the electronic device 101, 210 and require data communications. The data rate/latencies may be pre-stored at the electronics device 101, 220 and/or received from an external source. Communication requirements for an application are not limited to data rate and/or latency but may also include other requirements, such as reliability.

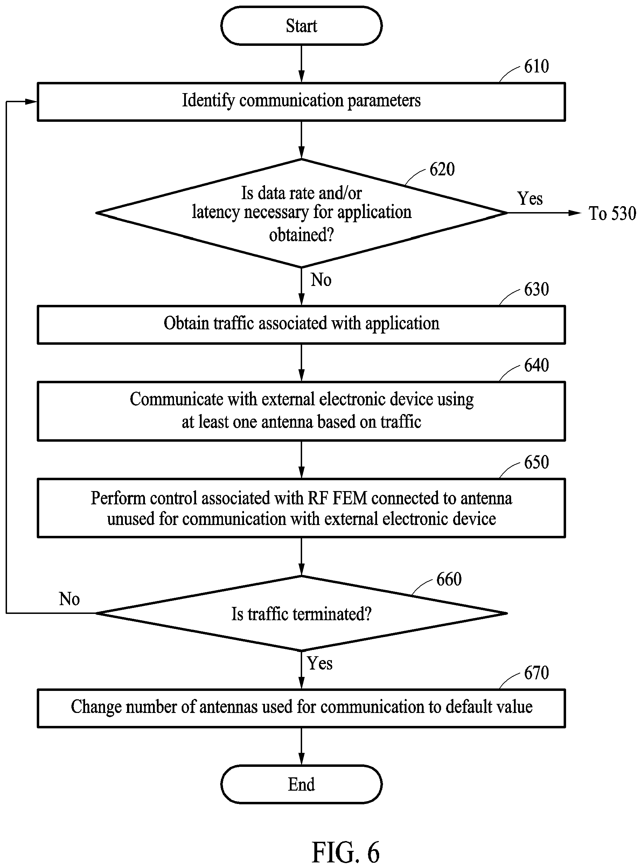

When the electronic device 101, 210 fails to obtain (e.g. due to being unable to be obtain or controlled not to be obtain) the data rate and/or latency or other specified communication requirements, the electronic device 101, 210 may perform a control operation based on the traffic information. The control operation based on the traffic information will be further described with reference to FIG. 6 below.

In operation 530, the electronic device 101, 210 may determine the number of spatial streams suitable for a data rate and/or latency necessary for the at least one application. If data rate and/or latency information on a plurality of applications has been obtained/being considered, the data rate may be a sum of the data rates of the plurality of applications and/or the latency the lowest of the latencies. For example, the electronic device 101, 210 may determine the number of spatial streams required based on a throughput according to the number of spatial streams and the obtained data rate. The throughput may be calculated using communication parameters (e.g., the communication parameters obtained in operation 510). For example, the throughput may be calculated based on a data rate, a channel utilization, and/or a ratio between a CCA busy time and a radio-on time. The data rate may be calculated as shown in Equation 1 below.

[Equation 1]

$$DataRate = \min(\log_2(1 + SNR\_tone), MaxBitsPerSc) \times \frac{NSS\_max \times Ntone}{DSYM_{DUR}}$$

In Equation 1, $SNR\_tone$ denotes a signal-to-noise ratio (SNR) for a subcarrier, $NSS\_max$ denotes the number of spatial streams, $Ntone$ denotes the number of subcarriers included in one orthogonal frequency-division multiplexing (OFDM) symbol, $DSYM_{DUR}$ denotes a length of an OFDM symbol, and $MaxBitsPerSc$ denotes the maximum number of bits per subcarrier in the Wi-Fi standard.

The throughput may be calculated by multiplying the data rate (e.g., the data rate of Equation 1) by an airtime fraction for a channel of the electronic device 101, 210. For example, the airtime fraction for the channel may be 1-channel utilization/255, or 1-CCA busy time/Radio on time.

The electronic device 101, 210 may determine the number of spatial streams necessary for communication within the maximum number of spatial streams that may be supported by the electronic device 101, 210 based on the obtained data rate and/or latency information. For example, the number of spatial streams may be determined so as to meet the required data rate and/latency of the at least one application for transmission and/or reception. However, the number of spatial streams may alternatively or additionally be determined based on other factors.

In operation 540, the electronic device 101, 210 may communicate with the external electronic device 102, 230 using at least one of a plurality of antennas (e.g., the antennas 212 and 214 of FIGS. 2 and 3) based on the number of spatial streams (e.g., the number of spatial streams determined in operation 530). For example, when two spatial streams are determined in operation 530, the electronic device 101, 210 may communicate with the external electronic device 102, 230 using two antennas 212 and 214. This may apply to transmission and or reception antennas. Similarly if eight antennas are available and but only 4 spatial streams are required to meet the data rate, only four of the eight antennas may be used. Alternatively, the number of antennas to be used may be determined using factors other than the number of spatial streams required. However, the number of spatial streams may only be changed within the number that can be supported by the external electronic device 102, 230 for the relevant one of reception or transmission. When the number of spatial streams/antennas required/used is less than the maximum available, there will be one or more unused antennas.

In operation 550, the electronic device 101, 210 may perform control associated with an RF FEM (e.g., a portion of the RF FEMs 331 to 337 of FIG. 2) connected to an antenna unused for communication with the external electronic device 102, 230. For example, the electronic device 101, 210 may block an inflow of a signal into the RF FEM. For example, the electronic device 101, 210 may control a power supply of an element included in the RF FEM or the RF FEM as a whole via the PMIC. By doing this, power consumption of the RF FEM and thus power consumption associated with communications with the external electronic device for the application(s) may be reduced whist still meeting the data rate and/or latency requirements of the application(s).

FIG. 6 is a flowchart illustrating another example of a method of controlling an antenna and an RF FEM according to an example.

Referring to FIG. 6, operations 610 to 670 may be sequentially performed, however, these operations are not limited thereto. For example, operations 640 and 650 may be performed in parallel. The operations of FIG. 6 may also be combined or one or more of the operations omitted or skipped.

In operation 610, an electronic device (e.g., the electronic device 101 of FIG. 1, and the electronic device 210 of FIGS. 2 and 3) may identify communication parameters as described with reference to operation 510. When the electronic device 101, 210 performs an association with an external electronic device (e.g., the electronic device 102 of FIG. 1, and the external electronic device 230 of FIG. 2) and/or transmits and receives data to and from the external electronic device 102, 230, communication parameters associated with the link between the electronic device 101, 210 and the external electronic device 102, 230 may be obtained. Communication parameters may include one or more of a communication standard (e.g., a Wi-Fi standard), the maximum number of spatial streams of the electronic device 101, 210, the maximum number of spatial streams of an external electronic device (e.g., the external electronic device 102 of FIG. 1, and the external electronic device 230 of FIG. 2), an RSSI, a link speed, a channel utilization, a CCA busy time, radio-on time, a latency, a TX success count, and/or a TX retransmission count.

In operation 620, the electronic device 101, 210 may determine whether a data rate and/or latency necessary for an application that is running at the electronic device 101, 210 and requires data communications is obtained as described with reference to operation 520. For example, the electronic device 101, 210 may determine the data rate and/or latency necessary for the application based on the type of application, an identity of the application, or any other information associated with the application. For example, the electronic device 101, 210 may determine different data rates and/or different latencies for each of a game application and a video call application. Alternatively, different data rates and/or different latencies may be determined for applications that are categorised as best effort services, foreground services, or background services. The application may be an application running in the foreground or background of the electronic device 101, 210. Data rate and/or latency information may also be obtained on a plurality of applications that are running at the electronic device 101, 210 and require data communications. The data rate/latencies may be pre-stored at the electronics device 101, 220 and/or received from an external source.

When the data rate and/or latency is determined not to be obtained (e.g. due to being unable to be obtained, controlled not to be obtained, or cannot be reliably obtained), the electronic device 101, 210 may obtain traffic information (e.g., TX traffic, and RX traffic) associated with the application in operation 630. For example, when an application is executed, the electronic device 101, 210 may identify a quantity of data transmitted and received (or to be transmitted or received) between the electronic device 101, 210 and an external electronic device (e.g., the electronic device 102 of FIG. 1, and the external electronic device 230 of FIG. 2) per unit of time. The traffic information may be obtained by monitoring traffic associated with the application(s) or obtaining traffic associated with the application(s). The traffic may be traffic associated with the application(s) that is to be transmitted or received and/or traffic associated with the application(s) that has been transmitted or received. For example, the data transmissions/receptions associated with an application may be monitored for a second and empirical (i.e. practical) data rates for the application determined.

In operation 640, the electronic device 101, 210 may determine the number of antennas used for the communication with the external electronic device 102, 230, based on the information on the traffic (e.g., the information on the traffic obtained in operation 630). This determination may be performed by determining whether there is a number of antennas that may be used that is less than the maximum (or less than the number currently used) that may still support the volume of traffic indicated by the traffic information. This may be implemented using thresholds that are based on maximum throughput for different numbers of antennas.

Alternatively, thresholds may be used in an different manner to determine the number of antennas to use. For example, the electronic device 101, 210 may compare the traffic information to a first traffic threshold and a second traffic threshold and determine the number of antennas used for communication, based on a comparison result. The first traffic threshold may include a threshold that has been determined based on the power consumption of RF FEMs (e.g., the RF FEMs 331 to 337 of FIG. 3). For example, the first traffic threshold may include a traffic threshold that above which (but below a second threshold) if the number of antennas is reduced, the traffic level may be maintained but power savings may be made by reducing or stopping power to the RF FEMs 331 to 337 associated with unused antennas. For example, when the traffic is greater than the first traffic threshold, the electronic device 101, 210 may set the number of antennas used for communication to be less than or equal to a predetermined (e.g. maximum) number of antennas. Optionally, if the traffic level is below the first threshold, it may be determined that reducing the numbers of antennas used and thus reducing power to one or more RF FEMs would have little impact on power consumption due the low or short usage of the antenna/RF FEM and therefore the number of antennas may be maintained if the traffic level is below the first threshold. The second traffic threshold may include a threshold associated with the maximum link speed according to the number of antennas used for communication. For example, the electronic device 101, 210 may set at least one second traffic threshold, compare the traffic to the second traffic threshold, and determine the number of antennas based on a comparison result. The electronic device 101, 210 may also set the second traffic threshold based on a communication delay that may occur in response to a change in the number of antennas used for communication. For example, the second traffic threshold may be set to a value less than the maximum link speed according to the number of antennas, such that if the traffic level is below the second threshold or between the second threshold and the first threshold the number of antenna in use may be reduced, so as to reduce power supplied to the RF FEMs and thus power consumption of the electronic device. Although first and second threshold have been described, only a single traffic threshold may be used or more than two traffic thresholds may be used. For example, if a single threshold is used, it may be set such that if the traffic is below the threshold a number of antennas used for the communication of the traffic is reduced, where as if the traffic is above the threshold, the number of antennas used for the communication of the traffic is maintained. Alternatively, if two or more traffic thresholds are defined, the intervals between each of the threshold may correspond to a particular number of antennas, such that if the measured traffic falls in a particular interval, the number of antennas used corresponds to the number of antennas set for the interval (i.e. the minimum number of antennas required to satisfy the level of traffic in the interval). By virtue of such a configuration, the minimum number of antennas for a particular traffic level can be used, and power to RF FEM associated with unused antennas reduced. Compared to the use of data rates, the use of traffic information may be advantageous when required data rates for an application vary, cannot be predetermined, cannot be obtained, or are otherwise unreliable, since the traffic information is based on practical measurements.

The electronic device 101, 210 may communicate with the external electronic device 102, 230 using at least one of a plurality of antennas (e.g., the antennas 212 and 214 of FIGS. 2 and 3) based on the thresholds and the determined number of antennas. The electronic device 101, 210 may transmit data to the external electronic device 102, 230 using at least one TX antenna. The electronic device 101, 210 may receive data from the external electronic device 102, 230 using at least one RX antenna. Depending on an amount of TX traffic and an amount of RX traffic, the number of TX antennas and the number of RX antennas in the electronic device 101, 210 for the communication with the external electronic device 102, 230 may be different from each other. In an example, when the electronic device 101, 210 operates as an augmented reality (AR) host, the electronic device 101, 210 may use a larger number of TX antennas than the number of RX antennas for communication with the external electronic device 102, 230 (e.g., an access point). In another example, when the electronic device 101, 210 operates as an AR client, the electronic device 101, 210 may use a larger number of RX antennas than the number of TX antennas for communication with the external electronic device 102, 230.

In operation 650, the electronic device 101, 210 may perform control associated with an RF FEM (e.g., a portion of the RF FEMs 331 to 337 of FIG. 2) connected to an antenna unused for communication with the external electronic device 102, 230. For example, the electronic device 101, 210 may block an inflow of a signal into the RF FEM. For example, the electronic device 101, 210 may control a power supply of an element included in the RF FEM such as to reduce its power consumption.

In operation 660, the electronic device 101, 210 may determine whether the traffic is terminated. When the traffic is not terminated, the electronic device 101, 210 may reperform operations 610 to 650.

When the traffic is terminated, the electronic device 101, 210 may change the number of antennas used for communication to a default value in operation 670. Various default values may be set. In an example, the electronic device 101, 210 may set the default value to "1". In another example, the electronic device 101, 210 may set the default value to the total number (e.g., "2") of antennas (e.g., the antennas 212 and 214) included in the electronic device 101, 210.

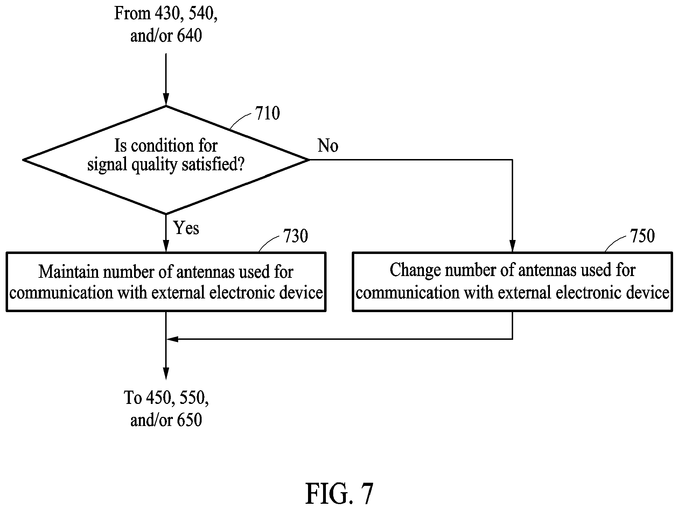

FIG. 7 is a diagram illustrating a method of controlling an antenna according to an example.

Referring to FIG. 7, an electronic device (e.g., the electronic device 101 of FIG. 1, and the electronic device 210 of FIGS. 2 and 3) may control antennas (e.g., the antennas 212 and 214 of FIGS. 2 and 3), based on the signal quality together with the data rate, the latency, and/or the traffic information as described with reference to FIGs. 4 to 6.

In operation 710, following the determination of the number of antennas to use and/or performing communication using the determined antennas accordingly to any of the previously described examples, the electronic device 101, 210 may determine whether a condition for signal quality of communication with an external electronic device (e.g., the electronic device 102 of FIG. 1, and the external electronic device 230 of FIG. 2) is satisfied. According to an example, the electronic device 101, 210 may perform communication based on the number of antennas determined in operation 430, operation 540, and/or operation 640, and identify the signal quality of the communication. The electronic device 101, 210 may identify the signal quality of the communication, based on one or more of an RSSI, a link speed, a TX success count, a retransmission count, an interference measure, the number of external electronic devices (e.g., the electronic device 102 of FIG. 1, and the external electronic device 230 of FIG. 2), and/or a channel utilization. For example, when the number of external electronic devices (e.g., the electronic device 102 of FIG. 1, and the external electronic device 230 of FIG. 2) is greater than or equal to a threshold (e.g., a threshold number of external electronic devices connected to an AP or in the same communication environment), the electronic device 101, 210 may determine that the condition for the signal quality of the communication is not satisfied. For example, when the channel utilization is greater than or equal to a threshold (e.g., a channel utilization threshold), the electronic device 101, 210 may determine that the condition for the signal quality of the communication is not satisfied.

When the condition for the signal quality of the communication is satisfied, the electronic device 101, 210 may maintain the number of antennas (e.g., the number of antennas determined in operation 430, operation 540, and/or operation 640) and may communicate with the external electronic device 102, 230 in operation 730.

When the condition for the signal quality of the communication is not satisfied, the electronic device 101, 210 may change the number of antennas and communicate with the external electronic device 102, 230 based on the changed number of antennas in operation 750. The changed number of antennas may be maximum number of antennas available, the previous number of antennas used before the previous change in the number of antennas, or a number of antennas determined to be required to meet the signal quality threshold.

According to an example, the electronic device 101, 210 may set the number of antennas used for the communication with the external electronic device 102, 230 based on the signal quality, to increase the communication quality. For example, the number of transmission and/or reception antennas may be increased in order to improve transmit and/or reception diversity in order to improve signal quality.

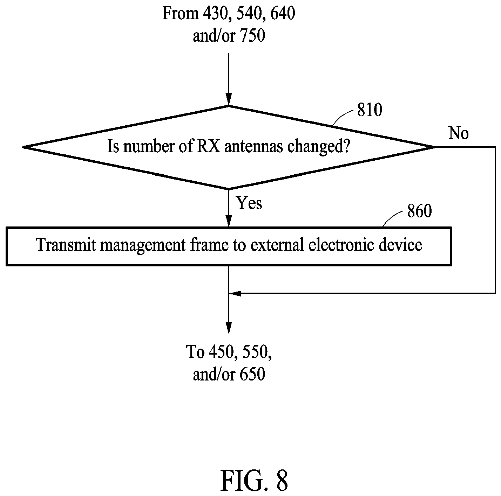

FIG. 8 is a diagram illustrating a method of transmitting a management frame according to an example.

Referring to FIG. 8, an electronic device (e.g., the electronic device 101 of FIG. 1, and the electronic device 210 of FIGS. 2 and 3) may transmit a management frame including information on the number of RX antennas to an external electronic device (e.g., the external electronic device 102 of FIG. 1, and the external electronic device 230 of FIG. 2), when the number of RX antennas is changed, for example, as may occur by virtue of any of the above-described approaches. The external electronic device 102, 230 may receive the management frame and control the TX antenna of the external electronic device 230 based on the number of RX antennas of the electronic device 230.

In operation 810, the electronic device 101, 210 may identify the number of RX antennas of the electronic device 101, 210. For example, the electronic device 101, 210 may determine whether the number of RX antennas (e.g., the number of RX antennas determined in operation 430, operation 540, and/or operation 640) is changed from the original number of RX antennas (e.g., a default number of RX antennas). For example, the electronic device 101, 210 may determine whether the number of RX antennas has been changed in operation 750.

In operation 860, the electronic device 101, 210 may transmit a management frame including information on the number of RX antennas of the electronic device 101, 210 to the external electronic device 102, 230. For example, in Wi-Fi 4, the electronic device 101, 210 may exchange management frames with the external electronic device 102, 230 by performing re-association. For example, in Wi-Fi 5 and Wi-Fi 6, the electronic device 101, 210 may exchange an operation mode notification (OMN) frame or an operation mode indication (OMI) frame with the external electronic device 102, 230.

According to an example, the electronic device 101, 210 may transmit information associated with the RX antennas of the electronic device 101, 210 to the external electronic device 102, 230, so that the external electronic device 102, 230 may control the number of TX antennas of the external electronic device 102, 230 based on the number of RX antennas of the electronic device 101, 210.

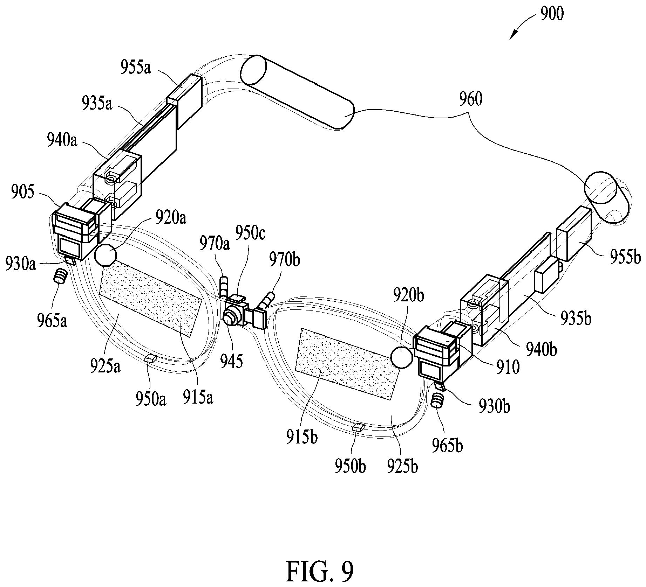

FIG. 9 illustrates a structure of an electronic device according to an example.

Referring to FIG. 9, a wearable electronic device 900 (e.g., the electronic device 101 of FIG. 1, or the electronic device 210 of FIG. 2) may be worn on a face of a user to provide the user with an image associated with an AR service and/or a VR service. However, the wearable electronic device 900 is an example of the electronic device 101, 210, and embodiments and examples are not limited thereto. Accordingly, any of the above-described approaches for antennas control may be implemented in or by the wearable electronic device 900.

In an example, the wearable electronic device 900 may include a first display 905, a second display 910, screen display portions 915a and 915b, input optical members 920a and 920b, a first transparent member 925a, a second transparent member 925b, lighting units 930a and 930b, a first PCB 935a, a second PCB 935b, a first hinge 940a, a second hinge 940b, an imaging camera 945, a plurality of microphones (e.g., a first microphone 950a, a second microphone 950b, and a third microphone 950c), a plurality of speakers (e.g., a first speaker 955a, and a second speaker 955b), a battery 960, a first recognition camera 965a, a second recognition camera 965b, a first eye detection camera 970a, and a second eye detection camera 970b.

In an example, a display (e.g., the first display 905 and the second display 910) may include, for example, a liquid crystal display (LCD), a digital mirror device (DMD), or a liquid crystal on silicon (LCoS), an organic light-emitting diode (OLED), or a micro light-emitting diode (micro LED). Although not illustrated in the drawings, when the first display 905 or the second display 910 is one of an LCD, a DMD, and an LCoS, the wearable electronic device 900 may include a light source which emits light to a screen output area of the first display 905 or the second display 910. In an example, when the first display 905 or the second display 910 is capable of generating light by itself, for example, when the first display 905 or the second display 910 is either an OLED or a micro-LED, the wearable electronic device 900 may provide a virtual image with a relatively high quality to the user even when a separate light source is not included. For example, when the first display 905 or the second display 910 is implemented as an OLED or a micro-LED, a light source may be unnecessary, and accordingly, the wearable electronic device 900 may be lightened. Hereinafter, the first display 905 or the second display 910 capable of generating light by itself may also be referred to as a "self-luminous display", and description will be made on the assumption of the self-luminous display.

According to an example, the first display 905 or the second display 910 may include at least one micro-LED. For example, the micro-LED may express red (R), green (G), and blue (B) by emitting light by itself, and a single chip may implement a single pixel (e.g., one of R, G, and B pixels) because the micro-LED is relatively small in size (e.g., about 100 micrometers ($\mu$m) or less). Accordingly, it may be possible to provide a high resolution without a backlight unit (BLU) when the first display 905 or the second display 910 is implemented as a micro-LED. However, examples are not limited thereto, and a single chip may be implemented by a plurality of pixels including R, G, and B pixels. The first display 905 or the second display 910 may also be referred to as a "light source".

In an example, the first display 905 or the second display 910 may include pixels for displaying a virtual image. The first display 905 or the second display 910 may further include infrared pixels that emit infrared light.

In an example, the first display 905 or the second display 910 may further include light-receiving pixels (e.g., photo sensor pixels) that are disposed between pixels to receive light reflected from eyes of a user, convert the received light to electrical energy, and output the electrical energy. Light-receiving pixels may also be referred to as "eye tracking sensors". The eye tracking sensor may sense infrared light generated by reflecting light emitted by an infrared pixel included in the first display 905 or the second display 910 by eyes of a user.

The wearable electronic device 900 may detect a gaze direction (e.g., a movement of a pupil) of the user, using light-receiving pixels 315. For example, the wearable electronic device 900 may detect and track a gaze direction of a right eye of the user and a gaze direction of a left eye of the user through one or more light-receiving pixels of the first display 905 and one or more light-receiving pixels of the second display 910. The wearable electronic device 900 may also determine a central position of a virtual image according to the gaze directions (e.g., directions in which pupils of the right eye and the left eye of the user gaze) detected through the one or more light-receiving pixels.

The wearable electronic device 900 may include the first display 905, the second display 910, the first transparent member 925a and/or the second transparent member 925b. A user may use the wearable electronic device 900 while wearing the wearable electronic device 900 on a face of the user. According to an example, the first transparent member 925a may face the right eye of the user, and the second transparent member 925b may face the left eye of the user. According to examples, when the first display 905 and the second display 910 are transparent, the first display 905 and the second display 910 may be disposed to face the eyes of the user to configure the screen display portions 915a and 915b.

The first display 905 and the second display 910 may each include a first control circuit (not shown). The first control circuit may control the first display 905 and the second display 910. The first control circuit may control an operation of a liquid crystal element of a transparent cover (not shown) included in the first display 905 or the second display 910. In an example, light emitted from the first display 905 and the second display 910 may reach the screen display portion 915a formed on the first transparent member 925a that faces the right eye of the user, and the screen display portion 915b formed on the second transparent member 925b that faces the left eye of the user, by passing through a lens (not shown) and a waveguide (not shown).

The lens (not shown) may be disposed in front of the first display 905 or the second display 910. The lens (not shown) may include a concave lens and/or a convex lens. For example, the lens (not shown) may include a projection lens (not shown) or a collimation lens (not shown).

In an example, the light emitted from the first display 905 or the second display 910 may be guided by a waveguide (not shown) through the input optical member 920a or 920b. Light traveling in the waveguide (not shown) may be guided toward the eyes of the user through an output optical member (not shown). The screen display portions 915a and 915b may be determined based on light emitted toward the eyes of the user.

For example, the light emitted from the first display 905 or the second display 910 may be reflected from a grating area of the waveguide (not shown) formed in the input optical member 920a, 920b and the screen display portion 915a, 915b, and may be transmitted to an eye of the user.

In an example, the screen display portion 915a, 915b, or a transparent member (e.g., the first transparent member 925a and the second transparent member 925b) may include a reflective lens, and a lens including a waveguide (not shown). The waveguide (not shown) may function to transmit a light source generated by the first display 905 or the second display 910 to an eye of the user, and may also be referred to as an "optical waveguide". Hereinafter, an "optical waveguide" or "waveguide" may correspond to the screen display portion 915a, 915b.

The screen display portion 915a, 915b may be a path through which external light is incident, totally reflected, and emitted, and may be distinguished from the first transparent member 925a and the second transparent member 925b through which external light is simply reflected or transmitted.

In an example, the screen display portion 915a, 915b may be formed of glass, plastic, or a polymer, and may have a nanopattern formed on one surface of the inside or outside, for example, a grating structure of a polygonal or curved shape. According to an example, light incident to one end of the screen display portion 915a, 915b through the input optical member 920a, 920b may be propagated inside an optical waveguide (not shown) by the nanopattern to be provided to the user. For example, the screen display portion 915a, 915b including a freeform prism may provide incident light to the user through a reflection mirror.

The screen display portion 915a, 915b may include at least one of a reflective element (e.g., a reflection mirror) or at least one diffractive element (e.g., a diffractive optical element (DOE) or a holographic optical element (HOE)). The screen display portion 915a, 915b may guide light emitted from a display (e.g., the first display 905 and the second display 910) to the eyes of the user, using the at least one diffractive element or the reflective element included in the screen display portion 915a, 915b.

According to an example, the diffractive element may include the input optical member 920a, 920b and/or an output optical member of FIG. 3). For example, the input optical member 920a, 920b may refer to an input grating area, and the output optical member 340 may refer to an output grating area. The input grating area may function as an input terminal to diffract (or reflect) light output from the first display 905 or the second display 910 (e.g., a micro LED) to transmit the light to the screen display portion 915a or 915b. The output grating area may function as an exit to diffract (or reflect) light transmitted to a waveguide (not shown) to an eye of the user.

According to an example, the reflective element may include a total reflection optical element or a total reflection waveguide for total internal reflection (TIR). For example, total reflection, which is one of schemes of inducing light, may define an angle of incidence such that light (e.g., a virtual image) entering through the input grating area is completely or almost completely reflected from a portion (e.g., a predetermined surface) of the screen display portion 915a, 915b, to completely or almost completely transmit the light to the output grating area.

The first transparent member 925a and/or the second transparent member 925b may be formed as a glass plate, a plastic plate, or a polymer, and may be transparently or translucently formed, for example. According to an example, the first transparent member 925a may be disposed to face the right eye of the user, and the second transparent member 925b may be disposed to face the left eye of the user.

The lighting unit 930a, 930b may be used differently according to a position in which the lighting unit 930a, 930b is attached. For example, the lighting unit 930a, 930b may be attached in the vicinity of a frame of the wearable electronic device 900. The lighting unit 930a, 930b may be used as an auxiliary device for facilitating eye-gaze detection when pupils are captured using the eye tracking camera 970a, 970b. The lighting unit 930a, 930b may use an IR LED with a visible light wavelength or an infrared light wavelength.

Alternatively, the lighting unit 930a, 930b may be attached in the vicinity of a hinge (e.g., the first hinge 940a, the second hinge 940b) connecting frames (e.g., rims) and a temple corresponding to a leg portion of glasses of the wearable electronic device 900 or in the vicinity of a camera (e.g., the first recognition camera 965a, and the second recognition camera 965b) disposed adjacent to a bridge connecting the frames. Here, the first recognition camera 965a and the second recognition camera 965b may be, for example, global shutter (GS) cameras, but are not limited thereto.

When capturing is performed using a GS camera, the lighting unit 930a, 930b may be used to supplement a surrounding brightness. For example, the lighting unit 930a, 930b may be used in a dark environment or when it is not easy to detect a subject to be captured due to reflected light and mixing of various light sources.

In an alternative example, the lighting unit 930a, 930b may be omitted. The lighting unit 930a, 930b may be replaced by infrared pixels included in the first display 905 and the second display 910. In an example, the lighting unit 930a, 930b may be included in the wearable electronic device 900 to assist infrared pixels included in the first display 905 and the second display 910.

A PCB (e.g., the first PCB 935a, the second PCB 935b) may be disposed in a temple of the wearable electronic device 900, and transmit an electrical signal to each module (e.g., a camera, a display, an audio, or a sensor) and another PCB through a flexible printed circuit board (FPCB). According to examples, at least one PCB may include the first PCB 935a, the second PCB 935b, and an interposer (not shown) disposed between the first PCB 935a and the second PCB 935b.

In an example, a control circuit (not shown) for controlling components of the wearable electronic device 900 other than the first display 905 and the second display 910 may be disposed on a PCB (e.g., the first PCB 935a and the second PCB 935b). The control circuit may control components other than the first display 905 and the second display 910 and perform an operation such as depth value estimation. The control circuit may include a communication circuit (e.g., the communication module 190 of FIG. 1) or a memory (e.g., the memory 130 of FIG. 1). The control circuit may control the first display 905, the second display 910, and/or the other components.

The hinge 940a, 940b may correspond to a portion connecting the frame and the temple of the wearable electronic device 900.

In an example, the imaging camera 945 may be also referred to as a "high resolution (HR)" or a "photo video (PV)", and may include a high-resolution camera. The imaging camera 945 may include a color camera having functions for obtaining a high-quality image, such as an automatic focus (AF) function and an optical image stabilizer (OIS). However, examples are not limited thereto, and the imaging camera 945 may include a GS camera or a rolling shutter (RS) camera, for example.

In an example, a plurality of microphones (e.g., the first microphone 950a, the second microphone 950b, and the third microphone 950c) may convert an external acoustic signal into electrical audio data. The electrical audio data may be variously utilized according to a function (or an application being executed) being performed by the wearable electronic device 900.

In an example, the plurality of speakers (e.g., the first speaker 955a and the second speaker 955b) may output audio data that is received from a communication circuit (e.g., the communication module 190 of FIG. 1) or stored in the memory 130.

In an example, one or more batteries 960 may be included, and may supply power to components constituting the wearable electronic device 900.

In an example, the first recognition camera 965a and the second recognition camera 965b may include cameras used for three degrees of freedom (3DoF) and six degrees of freedom (6DoF) head tracking, hand detection and tracking, and gesture and/or space recognition. For example, the first recognition camera 965a and the second recognition camera 965b may each include a GS camera to detect a movement of a head or a hand and track the movement. For example, a stereo camera may be used for head tracking and space recognition, and accordingly two GS cameras with the same standard and performance may be used. An RS camera may be used to detect a quick hand movement and a minute movement of a finger and track a movement. In an example, a GS camera having superior performance (e.g., image drag) in comparison to a camera may be mainly used, however, embodiments and examples are not limited thereto. According to examples, an RS camera may be used. The first recognition camera 965a and the second recognition camera 965b may perform a simultaneous localization and mapping (SLAM) function through depth imaging and spatial recognition for 6DoF. In addition, the first recognition camera 965a and the second recognition camera 965b may perform a user gesture recognition function.

In an example, at least one sensor (not shown), e.g., a gyro sensor, an acceleration sensor, a geomagnetic sensor, and/or a gesture sensor, the first recognition camera 965a, and the second recognition camera 965b may perform at least one of head tracking for 6DoF, pose estimation and prediction, gesture and/or space recognition, and/or a function of a SLAM through depth imaging.

In an example, the first recognition camera 965a and the second recognition camera 965b may be classified and used as a camera for head tracking and a camera for hand tracking.

In an example, the first eye tracking camera 970a and the second eye tracking camera 970b may detect and track pupils. The first eye tracking camera 970a and the second eye tracking camera 970b may be used so that the center of a virtual image projected on the wearable electronic device 900 may be disposed according to gaze directions of pupils of a user wearing the wearable electronic device 900. For example, as the first eye tracking camera 970a and the second eye tracking camera 970b, a GS camera may be mainly used to detect a pupil and track a fast pupil movement. The first eye tracking camera 970a may be installed to correspond to the right eye of the user, and the second eye tracking camera 970b may be installed to correspond to the left eye of the user. Here, the first eye tracking camera 970a and the second eye tracking camera 970b may have the same camera performance and specifications, however, embodiments and examples are not limited thereto.

According to an example, an electronic device 101, 210 may include a plurality of antennas 212 and 214, a plurality of RF FEMs 331, 333, 335, and 337 connected to the plurality of antennas 212 and 214, at least one wireless communication module 192 connected to the plurality of RF FEMs 331, 333, 335, and 337, at least one processor 120, 351 operatively connected to the wireless communication module 192, and a memory 130 electrically connected to the processor 120, 351 and configured to store instructions executable by the processor. When the instructions are executed by the processor 120, 351, the processor 120, 351 may be configured to perform a plurality of operations. The plurality of operations may include obtaining at least one of a data rate necessary for an application, a latency necessary for the application, or traffic associated with the application. The plurality of operations may include communicating with an external electronic device 102, 230 using at least one of the plurality of antennas 212 and 214, based on the at least one of the data rate, the latency, or the traffic. The plurality of operations may include performing a control associated with an RF FEM connected to an antenna unused for communication with the external electronic device 102, 230 among the plurality of antennas 212 and 214.

When at least one of the data rate or the latency is obtainable, the communicating with the external electronic device 102, 230 may include calculating a throughput corresponding to the data rate or the latency. When at least one of the data rate or the latency is obtainable, the communicating with the external electronic device 102, 230 may include communicating with the external electronic device 102, 230 based on the throughput.

The communicating with the external electronic device 102, 230 based on the throughput may include calculating a number of spatial streams necessary for the throughput. The communicating with the external electronic device 102, 230 based on the throughput may include determining a number of antennas necessary for the communication based on the number of spatial streams. The communicating with the external electronic device 102, 230 based on the throughput may include communicating with the external electronic device 102, 230 using at least one of the plurality of antennas 212 and 214 based on the determined number of antennas.

The performing of the control may include blocking an inflow of a signal into the RF FEM or controlling a power supply of an element included in the RF FEM.

When the data rate and the latency are unobtainable, the communicating with the external electronic device 102, 230 may include communicating with the external electronic device 102, 230 using at least one of the plurality of antennas 212 and 214 based on the traffic.

The communicating with the external electronic device 102, 230 based on the traffic may include determining a number of antennas necessary for the communication among the antennas by comparing the traffic to a first traffic threshold and a second traffic threshold. The communicating with the external electronic device 102, 230 based on the traffic may include communicating with the external electronic device 102, 230 using at least one of the plurality of antennas 212 and 214 based on the determined number of antennas.

The first traffic threshold may include a threshold associated with power consumption of the RF FEMs 331, 333, 335, and 337 included in the electronic device 101, 210. The second traffic threshold may include a threshold associated with the maximum link speed according to a number of antennas used for communication.

The plurality of operations may further include identifying a signal quality of the communication with the external electronic device 102, 230. The communicating with the external electronic device 102, 230 may include communicating with the external electronic device 102, 230 using at least one of the plurality of antennas 212 and 214 based on the signal quality and the at least one of the data rate, the latency, or the traffic.

The plurality of operations may further include transmitting a management frame including information on a number of RX antennas of the electronic device 101, 210 to the external electronic device 102, 230.

The communicating with the external electronic device 102, 230 may include transmitting data to the external electronic device 102, 230 using a first antenna based on the at least one of the data rate, the latency, or the traffic, and receiving data from the external electronic device 102, 230 using a second antenna based on the at least one of the data rate, the latency, or the traffic. The number of the first antennas may be different from the number of the second antennas.

According to an example, a method of operating the electronic device 210, 230 may include obtaining at least one of a data rate necessary for an application, a latency necessary for the application, or traffic associated with the application. The method may include communicating with an external electronic device 102, 230 using at least one of the plurality of antennas 212 and 214, based on the at least one of the data rate, the latency, or the traffic. The method may include performing a control associated with an RF FEM connected to an antenna unused for communication with the external electronic device 102, 230 among the plurality of antennas 212 and 214.

When at least one of the data rate or the latency is obtainable, the communicating with the external electronic device 102, 230 may include calculating a throughput corresponding to the data rate or the latency. When at least one of the data rate or the latency is obtainable, the communicating with the external electronic device 102, 230 may include communicating with the external electronic device 102, 230 based on the throughput.

The communicating with the external electronic device 102, 230 based on the throughput may include calculating a number of spatial streams necessary for the throughput. The communicating with the external electronic device 102, 230 based on the throughput may include determining a number of antennas necessary for the communication based on the number of spatial streams. The communicating with the external electronic device 102, 230 based on the throughput may include communicating with the external electronic device 102, 230 using at least one of the plurality of antennas 212 and 214 based on the determined number of antennas.

The performing of the control may include blocking an inflow of a signal into the RF FEM or controlling a power supply of an element included in the RF FEM.

When the data rate and the latency are unobtainable, the communicating with the external electronic device 102, 230 may include communicating with the external electronic device 102, 230 using at least one of the plurality of antennas 212 and 214 based on the traffic.

The communicating with the external electronic device 102, 230 based on the traffic may include determining a number of antennas necessary for the communication among the antennas by comparing the traffic to a first traffic threshold and a second traffic threshold. The communicating with the external electronic device 102, 230 based on the traffic may include communicating with the external electronic device 102, 230 using at least one of the plurality of antennas 212 and 214 based on the determined number of antennas.

The first traffic threshold may include a threshold associated with power consumption of the RF FEMs 331, 333, 335, and 337 included in the electronic device 101, 210. The second traffic threshold may include a threshold associated with the maximum link speed according to a number of antennas used for communication.

The method may further include identifying a signal quality of the communication with the external electronic device 102, 230. The communicating with the external electronic device 102, 230 may include communicating with the external electronic device 102, 230 using at least one of the plurality of antennas 212 and 214 based on the signal quality and the at least one of the data rate, the latency, or the traffic.

The method may further include transmitting a management frame including information on a number of RX antennas of the electronic device 101, 210 to the external electronic device 102, 230.

The communicating with the external electronic device 102, 230 may include transmitting data to the external electronic device 102, 230 using a first antenna based on the at least one of the data rate, the latency, or the traffic, and receiving data from the external electronic device 102, 230 using a second antenna based on the at least one of the data rate, the latency, or the traffic. The number of the first antennas may be different from the number of the second antennas.

The electronic device according to the embodiments and examples disclosed herein may be one of various types of electronic devices. The electronic devices may include, for example, a portable communication device (e.g., a smartphone), a computer device, a portable multimedia device, a portable medical device, a camera, a wearable device, or a home appliance. According to an example of the disclosure, the electronic device is not limited to those described above.

All of the examples, embodiments and features set out in this disclosure may be combined in any suitable manner unless described as incompatible or mutually exclusive. For example, the methods of described with reference to FIGs. 4 to 8 may be combined in appropriate manner. Furthermore, operations of each of the methods described with reference to FIGs. 4 to 8 may be omitted/skipped, and therefore the disclosed methods are not limited to the ordering and specific operations set out for each.

It should be appreciated that embodiments and examples of the disclosure and the terms used therein are not intended to limit the technological features set forth herein to particular embodiments and examples and include various changes, equivalents, or replacements for a corresponding embodiment or example. With regard to the description of the drawings, similar reference numerals may be used to refer to similar or related elements. It is to be understood that a singular form of a noun corresponding to an item may include one or more of the things, unless the relevant context clearly indicates otherwise. As used herein, each of such phrases as "A or B", "at least one of A and B", "at least one of A or B", "A, B or C", "at least one of A, B and C", and "at least one of A, B, or C", may include any one of, or all possible combinations of the items enumerated together in a corresponding one of the phrases. As used herein, such terms as "1st" and "2nd," or "first" and "second" may be used to simply distinguish a corresponding component from another, and does not limit the components in other aspect (e.g., importance or order). It is to be understood that if a component (e.g., a first component) is referred to, with or without the term "operatively" or "communicatively", as "coupled with", "coupled to", "connected with", or "connected to" another component (e.g., a second component), it means that the component may be coupled with the other component directly (e.g., by wire), wirelessly, or via a third component.

As used in connection with embodiments and examples of the disclosure, the term "module" may include a unit implemented in hardware, software, or firmware, and may interchangeably be used with other terms, for example, "logic", "logic block", "part", or "circuitry". A module may be a single integral component, or a minimum unit or part thereof, adapted to perform one or more functions. For example, according to an example, the module may be implemented in a form of an application-specific integrated circuit (ASIC).

Embodiments and examples as set forth herein may be implemented as software (e.g., the program 140) including one or more instructions that are stored in a storage medium (e.g., an internal memory 136 or an external memory 138) that is readable by a machine (e.g., the electronic device 101, 210). For example, a processor (e.g., the processor 120, 351) of the machine (e.g., the electronic device 101, 210) may invoke at least one of the one or more instructions stored in the storage medium, and execute it. This allows the machine to be operated to perform at least one function according to the at least one instruction invoked. The one or more instructions may include code generated by a compiler or code executable by an interpreter. The machine-readable storage medium may be provided in the form of a non-transitory storage medium. Here, the term "non-transitory" simply means that the storage medium is a tangible device, and does not include a signal (e.g., an electromagnetic wave), but this term does not differentiate between where data is semi-permanently stored in the storage medium and where the data is temporarily stored in the storage medium.

According to an example, a method according to examples of the disclosure may be included and provided in a computer program product. The computer program product may be traded as a product between a seller and a buyer. The computer program product may be distributed in the form of a machine-readable storage medium (e.g., compact disc read-only memory (CD-ROM)), or be distributed (e.g., downloaded or uploaded) online via an application store (e.g., PlayStore™), or between two user devices (e.g., smartphones) directly. If distributed online, at least part of the computer program product may be temporarily generated or at least temporarily stored in the machine-readable storage medium, such as memory of the manufacturer's server, a server of the application store, or a relay server.

According to examples, each component (e.g., a module or a program) of the above-described components may include a single entity or multiple entities, and some of the multiple entities may be separately disposed in different components. According to examples, one or more of the above-described components or operations may be omitted, or one or more other components or operations may be added. Alternatively or additionally, a plurality of components (e.g., modules or programs) may be integrated into a single component. In such a case, the integrated component may still perform one or more functions of each of the plurality of components in the same or similar manner as they are performed by a corresponding one of the plurality of components before the integration. According to examples, operations performed by the module, the program, or another component may be carried out sequentially, in parallel, repeatedly, or heuristically, or one or more of the operations may be executed in a different order or omitted, or one or more other operations may be added.

**Claims**

1. An electronic device (101, 210, 900) comprising:

a plurality of antennas (212, 214);
a plurality of radio frequency (RF) front-end modules (FEMs) (331, 333, 335, 337) connected to the plurality of antennas (212, 214);
at least one wireless communication module (192) connected to the plurality of RF FEMs (331, 333, 335, 337);
at least one processor (120, 351) operatively connected to the wireless communication module (192); and
a memory (130) electrically connected to the processor (120, 351) and configured to store instructions executable by the processor,
wherein, when the instructions are executed by the processor (120, 351), the processor (120, 351) is configured to perform a plurality of operations,
wherein the plurality of operations comprises:

obtaining at least one of a communication data rate associated with an application of the electronic device (101, 210, 900), a communication latency associated with the application, or communication traffic information associated with the application;
determining at least one of the plurality of antennas (212, 214) to be used for communication based on the at least one of the communication data rate, the communication latency, or the communication traffic information;

communicating with an external electronic device (102, 230) using the at least one of the plurality of antennas (212, 214); and

if there is an antenna among the plurality of antennas (212, 214) unused for the communication, performing a control associated with an RF FEM connected to the unused antenna.

2. The electronic device (101, 210, 900) of claim 1, wherein, when at least one of the communication data rate or the communication latency is obtainable, the determining of the at least one of the plurality of antennas comprises:

calculating a throughput corresponding to the communication data rate or the communication latency;
calculating a number of spatial streams to achieve the throughput; and
determining the at least one of the plurality of antennas (212, 214) based on the number of spatial streams.

3. The electronic device (101, 210, 900) of one of claims 1 to 2, wherein the performing of the control comprises blocking an inflow of a signal into the RF FEM connected to the unused antenna or controlling a power supply of an element included in the RF FEM connected to the unused antenna.

4. The electronic device (101, 210, 900) of one of claims 1 to 3, wherein, when the communication data rate and the communication latency are unobtainable, the determining of the at least one of the plurality of antennas (212, 214) comprises determining the at least one of the plurality of antennas (212, 214) based on the communication traffic information.

5. The electronic device (101, 210, 900) of one of claims 1 to 4, wherein determining the at least one of the plurality of antennas (212, 214) based on the communication traffic information comprises:
determining a number of antennas necessary for the communication among the antennas by comparing the communication traffic information to a first traffic threshold and/or a second traffic threshold.

6. The electronic device (101, 210, 900) of one of claims 1 to 5, wherein

the first traffic threshold comprises a communication traffic level associated with a specified power consumption of the RF FEMs (331, 333, 335, 337) included in the electronic device (101, 210, 900), and
the second traffic threshold comprises a communication traffic level associated with a maximum link speed according to a number of antennas used for the communication.

7. The electronic device (101, 210, 900) of one of claims 1 to 6, wherein

the plurality of operations further comprises identifying a signal quality of the communication with the external electronic device (102, 230), and
changing the at least one of the plurality of antennas (212, 214) used for communicating with the external electronic device (102, 230) based on the signal quality.

8. The electronic device (101, 210, 900) of one of claims 1 to 7, wherein the plurality of operations further comprises transmitting information on a number of reception (RX) antennas of the electronic device (101, 210, 900) to the external electronic device (102, 230).

9. The electronic device (101, 210, 900) of one of claims 1 to 8, wherein the communicating with the external electronic device (102, 230) comprises:

transmitting data to the external electronic device (102, 230) using a first number of antennas; and
receiving data from the external electronic device (102, 230) using a second number of antennas,
wherein the first number of antennas is different from the second number of antennas.

10. A method of operating an electronic device (101, 210, 900), the method comprising:

obtaining at least one of a communication data rate associated with an application of the electronic device (101, 210, 900), a communication latency associated with the application, or communication traffic information associated with the application;
determining at least one of a plurality of antennas (212, 214) in the electronic device (101, 210, 900) to be used for communication based on the at least one of the communication data rate, the communication latency, or the communication traffic information;

communicating with an external electronic device 102, 230 using the at least one of a plurality of antennas (212, 214); and

if there is an antenna among the plurality of antennas (212, 214) unused for the communication, performing a control associated with a radio frequency (RF) front-end module (FEM) connected to the unused antenna.

11. The method of claim 10, wherein, when at least one of the communication data rate or the communication latency is obtainable, the determining of the at least one of the plurality of antennas (212, 214) comprises:

calculating a throughput corresponding to the communication data rate or the communication latency;
calculating a number of spatial streams to achieve the throughput; and
determining the at least one of the plurality of antennas (212, 214) based on the number of spatial streams.

12. The method of one of claims 10 to 11, wherein the performing of the control comprises blocking an inflow of a signal into the RF FEM connected to the unused antenna or controlling a power supply of an element included in the RF FEM connected to the unused antenna.

13. The method of one of claims 10 to 12, wherein, when the communication data rate and the communication latency are unobtainable, the determining the at least one of the plurality of antennas (212, 214) comprises determining the at least one of the plurality of antennas (212, 214) based on the communication traffic information.

14. The method of one of claims 10 to 13, wherein determining the at least one of the plurality of antennas (212, 214) based on the communication traffic information comprises:
determining a number of antennas necessary for the communication among the antennas by comparing the communication traffic information to a first traffic threshold and/or a second traffic threshold.

15. The method of one of claims 10 to 14, wherein

the first traffic threshold comprises a communication traffic level associated with a specified power consumption of the RF FEMs (331, 333, 335, 337) included in the electronic device (101, 210, 900), and
the second traffic threshold comprises a communication traffic level associated with a maximum link speed according to a number of antennas used for the communication.

EP 4 366 188 A1

FIG. 1

200

FIG. 2

210

FIG. 3

```
                    ┌─────────────┐
                    │    Start    │
                    └─────────────┘
                           │
                           ▼                          ╭─ 410
    ┌──────────────────────────────────────────────────────┐
    │       Obtain at least one of data rate, latency, or traffic       │
    └──────────────────────────────────────────────────────┘
                           │
                           ▼                          ╭─ 430
    ┌──────────────────────────────────────────────────────┐
    │   Communicate with external electronic device using at least one antenna   │
    └──────────────────────────────────────────────────────┘
                           │
                           ▼                          ╭─ 450
    ┌──────────────────────────────────────────────────────┐
    │  Perform control associated with RF FEM connected to antenna unused  │
    │       for communication with external electronic device             │
    └──────────────────────────────────────────────────────┘
                           │
                           ▼
                    ┌─────────────┐
                    │     End     │
                    └─────────────┘
```

# FIG. 4

Start

Identify communication parameters ⟋510

Is data rate and/or
latency necessary for application
obtained? ⟋520 — No → To 630

Yes

Determine number of spatial streams ⟋530

Communicate with external electronic device using at least one
antenna based on number of spatial streams ⟋540

Perform control associated with RF FEM connected to antenna
unused for communication with external electronic device ⟋550

End

FIG. 5

Start

↓

Identify communication parameters ⌐ 610

↓

Is data rate and/or
latency necessary for application
obtained? ⌐ 620 → Yes → To 530

↓ No

Obtain traffic associated with application ⌐ 630

↓

Communicate with external electronic device using
at least one antenna based on traffic ⌐ 640

↓

Perform control associated with RF FEM connected to antenna
unused for communication with external electronic device ⌐ 650

↓

No ← Is traffic terminated? ⌐ 660

↓ Yes

Change number of antennas used for communication to default value ⌐ 670

↓

End

FIG. 6

From 430, 540,
and/or 640

710

Is condition for
signal quality satisfied?                    No

Yes                    730                                              750

Maintain number of antennas used for          Change number of antennas used for
communication with external electronic device  communication with external electronic device

To 450, 550,
and/or 650

FIG. 7

From 430, 540, 640
and/or 750

Is number of RX antennas changed? — 810

No

Yes

Transmit management frame to external electronic device — 860

To 450, 550,
and/or 650

FIG. 8

FIG. 9

## INTERNATIONAL SEARCH REPORT

| | International application No. |
|---|---|
| | **PCT/KR2023/013306** |

**A. CLASSIFICATION OF SUBJECT MATTER**

**H04B 7/06**(2006.01)i; **H04B 7/08**(2006.01)i; **H04B 7/0404**(2017.01)i; **H04W 84/12**(2009.01)i

According to International Patent Classification (IPC) or to both national classification and IPC

**B. FIELDS SEARCHED**

Minimum documentation searched (classification system followed by classification symbols)

H04B 7/06(2006.01); H04B 1/06(2006.01); H04B 7/00(2006.01); H04B 7/08(2006.01); H04L 27/06(2006.01); H04W 52/02(2009.01)

Documentation searched other than minimum documentation to the extent that such documents are included in the fields searched

Korean utility models and applications for utility models: IPC as above
Japanese utility models and applications for utility models: IPC as above

Electronic data base consulted during the international search (name of data base and, where practicable, search terms used)

eKOMPASS (KIPO internal) & keywords: 안테나(antenna), RF 프론트 엔드 모듈(radio frequency front end module), 애플리케이션(application), 데이터 레이트(data rate), 레이턴시(latency), 트래픽 정보(traffic information)

**C. DOCUMENTS CONSIDERED TO BE RELEVANT**

| Category* | Citation of document, with indication, where appropriate, of the relevant passages | Relevant to claim No. |
|---|---|---|
| Y | US 2019-0190583 A1 (GOOGLE LLC) 20 June 2019 (2019-06-20)<br>See paragraphs [0024], [0032], [0036]-[0037], [0039], [0048], [0052] and [0058]-[0063]; and figures 1, 3 and 7. | 1-15 |
| Y | US 8660507 B1 (MANSOUR, Nagi A. et al.) 25 February 2014 (2014-02-25)<br>See column 4, lines 32-67; and figure 4. | 1-15 |
| Y | US 2010-0061489 A1 (LIU, Der-Zheng et al.) 11 March 2010 (2010-03-11)<br>See paragraphs [0009]-[0010], [0014] and [0046]; and figures 1-2. | 2,8,11 |
| Y | US 2019-0036587 A1 (TELEFONAKTIEBOLAGET LM ERICSSON (PUBL)) 31 January 2019 (2019-01-31)<br>See paragraphs [0032], [0045] and [0054]. | 4-6,13-15 |
| A | US 2022-0029677 A1 (UNIVERSITY OF SOUTH CAROLINA) 27 January 2022 (2022-01-27)<br>See paragraphs [0051]-[0110]; and figures 1-13. | 1-15 |

☐ Further documents are listed in the continuation of Box C.    ☑ See patent family annex.

| * | Special categories of cited documents: | "T" | later document published after the international filing date or priority date and not in conflict with the application but cited to understand the principle or theory underlying the invention |
|---|---|---|---|
| "A" | document defining the general state of the art which is not considered to be of particular relevance | | |
| "D" | document cited by the applicant in the international application | "X" | document of particular relevance; the claimed invention cannot be considered novel or cannot be considered to involve an inventive step when the document is taken alone |
| "E" | earlier application or patent but published on or after the international filing date | | |
| "L" | document which may throw doubts on priority claim(s) or which is cited to establish the publication date of another citation or other special reason (as specified) | "Y" | document of particular relevance; the claimed invention cannot be considered to involve an inventive step when the document is combined with one or more other such documents, such combination being obvious to a person skilled in the art |
| "O" | document referring to an oral disclosure, use, exhibition or other means | | |
| "P" | document published prior to the international filing date but later than the priority date claimed | "&" | document member of the same patent family |

| Date of the actual completion of the international search | Date of mailing of the international search report |
|---|---|
| **01 December 2023** | **01 December 2023** |

| Name and mailing address of the ISA/KR | Authorized officer |
|---|---|
| **Korean Intellectual Property Office**<br>**Government Complex-Daejeon Building 4, 189 Cheongsa-ro, Seo-gu, Daejeon 35208** | |
| Facsimile No. **+82-42-481-8578** | Telephone No. |

Form PCT/ISA/210 (second sheet) (July 2022)

INTERNATIONAL SEARCH REPORT
Information on patent family members

International application No.

**PCT/KR2023/013306**

| Patent document cited in search report | | | Publication date (day/month/year) | Patent family member(s) | | | Publication date (day/month/year) |
|---|---|---|---|---|---|---|---|
| US | 2019-0190583 | A1 | 20 June 2019 | CN | 110692206 | A | 14 January 2020 |
| | | | | CN | 110692206 | B | 20 June 2023 |
| | | | | EP | 3613153 | A1 | 26 February 2020 |
| | | | | US | 10601491 | B2 | 24 March 2020 |
| | | | | US | 11031988 | B2 | 08 June 2021 |
| | | | | US | 2020-0177267 | A1 | 04 June 2020 |
| | | | | WO | 2019-117991 | A1 | 20 June 2019 |
| US | 8660507 | B1 | 25 February 2014 | | None | | |
| US | 2010-0061489 | A1 | 11 March 2010 | TW | 201012107 | A | 16 March 2010 |
| | | | | TW | I360971 | B | 21 March 2012 |
| | | | | US | 8792575 | B2 | 29 July 2014 |
| US | 2019-0036587 | A1 | 31 January 2019 | EP | 3408946 | A1 | 05 December 2018 |
| | | | | US | 2022-0352957 | A1 | 03 November 2022 |
| | | | | WO | 2017-129225 | A1 | 03 August 2017 |
| US | 2022-0029677 | A1 | 27 January 2022 | US | 11588526 | B2 | 21 February 2023 |
| | | | | US | 2023-0198587 | A1 | 22 June 2023 |

Form PCT/ISA/210 (patent family annex) (July 2022)